# EUROPÄISCHE PATENTSCHRIFT

(11) **EP 2 784 202 B1**
(45) Veröffentlichungstag und Bekanntmachung des Hinweises auf die Patenterteilung: **04.11.2015**
(21) Anmeldenummer: 14158113.2
(22) Anmeldetag: 06.03.2014
(51) Int. Cl.: D04H 1/4218, B29C 70/52, B29C 70/14, D04H 1/4242, D04H 1/544, D04H 1/549, D04H 1/551, D04H 1/64, D04H 1/645, D04H 1/736, D04H 1/74, D02G 3/44, D02G 3/40

(54) **Verfahren und Vorrichtung zur Herstellung eines Bändchens zur Herstellung von Formteilen, Bändchen, textiles Flächengebilde und Formteil**
Method and device for producing a tape for the preparation of moulded parts, tapes, textile flat structure and moulded part
Procédé et dispositif de fabrication d'une bandelette pour la fabrication de pièces moulées, bandelette, structure plate textile et pièce moulée

(30) Priorität: 26.03.2013 DE 102013103048
(43) Veröffentlichungstag der Anmeldung: 01.10.2014
(73) Patentinhaber: Deutsche Institute für Textil- und Faserforschung Denkendorf, 73770 Denkendorf (DE)
(72) Erfinder: Heitmann, Uwe, 73037 Göppingen (DE); Hehl, Jörg, 70771 Leinfelden (DE); Milwich, Markus, 73529 Schwäbisch Gmünd (DE)
(74) Vertreter: Baudler, Ron

(56) Entgegenhaltungen:
- EP-A1- 0 062 142
- WO-A1-01/81072
- WO-A2-94/09972
- DE-A1- 3 703 935
- DE-A1- 19 756 126

## Beschreibung

Die vorliegende Erfindung betrifft ein Verfahren zur Herstellung eines Bändchens zur Herstellung von Formteilen, welche eine Polymermatrix und darin eingebettete Verstärkungsstapelfasern aufweisen, wobei mindestens ein Faserband verwendet wird, welches die Verstärkungsstapelfasern enthält.

Unter einem Formteil wird dabei ein Werkstück verstanden, welches nach seiner Fertigstellung in einer durch den Fertigungsprozess vorgegebenen strukturellen Gestalt verbleibt.

Bei einem bekannten Verfahren zur Herstellung von derartigen Formteilen wird ein Bändchen, welches sowohl ein Polymer als auch Verstärkungsfasern enthält, zunächst zu einem textilen Flächengebilde verarbeitet. Die Verstärkungsfasern weisen dabei eine höhere spezifische Zugfestigkeit als die Polymermatrix auf. Dieses textile Flächengebilde wird sodann in ein Formwerkzeug, beispielsweise in eine Presse, eingelegt und geformt, so dass das textile Flächengebilde die durch das Formwerkzeug vorgegebene Form annimmt.

Durch die gegenseitigen Wechselwirkungen der Polymermatrix und der Verstärkungsfasern entsteht so ein Formteil, dessen mechanische Eigenschaften den Eigenschaften der beiden Komponenten überlegen sind. Insbesondere ergibt sich ein besonders gutes Verhältnis aus Festigkeit und Gewicht.

Dabei können die Bändchen gemäß dem Stand der Technik aus einem oder mehreren Faserbändern hergestellt werden, welche die Verstärkungsstapelfasern enthalten. Faserbänder sind dabei im Wesentlichen ungedrehte strangartige Faserverbände geringer Festigkeit aus Stapelfasern. Stapelfasern sind - im Gegensatz zu endlosen Filamentfasern - Fasern mit begrenzter Länge. Derartige Faserbänder weisen eine watteartige Struktur auf und können beispielsweise mittels einer Karde aus Faserflocken preiswert hergestellt werden.

Um nun ein geeignetes Bändchen herzustellen, ist es bekannt, mittels gängiger Spinnverfahren das Faserband mit einer Drehung zu versehen oder das Faserband mit Umwindefasern zu versehen, so dass ein garnartiges Bändchen entsteht, welches eine für dessen Weiterverarbeitung hinreichende Festigkeit aufweist.

Aufgabe der vorliegenden Erfindung ist es, ein verbessertes Verfahren zur Herstellung eines Bändchens zur Herstellung von Formteilen aus einem die Verstärkungsstapelfasern enthaltenden Faserband zu schaffen.

WO94/09972 offenbart ein Verfahren zur Herstellung eines Bandes aus kurzen Fasern und thermoplastichen Fasern in einer Polymermatrix.

Die Aufgabe wird bei einem Verfahren der eingangs genannten Art dadurch gelöst, dass das die Verstärkungsstapelfasern enthaltende Faserband durch eine Formeinrichtung geführt wird, so dass es ausgangsseitig der Formeinrichtung in einen vorbestimmten Querschnitt gebracht wird, und dass das in den vorbestimmten Querschnitt gebrachte Faserband mittels einer Fixiereinrichtung fixiert wird, so dass der vorbestimmte Querschnitt stabilisiert wird.

Bekannte Bändchen, welche durch Verdrehen und/oder Umwinden des Faserbandes hergestellt werden, weisen zwangsweise einen runden Querschnitt auf. Demgegenüber ergibt sich beim erfindungsgemäßen Verfahren der Vorteil, dass das Bändchen mit einer Vielzahl vorbestimmter Querschnitte hergestellt werden kann. Beispielsweise kann die Formeinrichtung hierzu trichterartig ausgebildet sein, wobei der ausgangsseitige Querschnitt der Formeinrichtung dem vorbestimmten Querschnitt des Faserbandes entsprechen kann. Aufgrund der watteartigen Struktur des Faserbandes nimmt das Faserband dann den durch die Formeinrichtung vorgegebenen Querschnitt an, wenn es durch die Formeinrichtung gezogen wird. Die Formeinrichtung und die Fixiereinrichtung können dabei so zusammenwirken, dass das Faserband so geführt wird, dass es den vorbestimmten Querschnitt beibehält, bis es hinreichend stabilisiert wird und den vorbestimmten Querschnitt von selbst beibehält.

Durch die Fixiereinrichtung kann das Faserband im vorbestimmten Querschnitt so stabilisiert werden, dass das so entstehende Bändchen beim Transportieren und/oder bei der Weiterverarbeitung eben diesen Querschnitt beibehält. Auf diese Weise kann das bisherige Herstellverfahren verkürzt werden, da auf Verfahrenschritte zum Verdrehen und/oder Umwinden des Faserbandes verzichtet werden kann. Hierbei kann das Bändchen auf seiner ganzen Länge oder abschnittsweise stabilisiert werden, wobei im letzteren Fall das fertige Bändchen eine bessere Drapierfähigkeit aufweist, was insbesondere dann von Vorteil ist, wenn Formteile mit komplexer Form hergestellt werden sollen. Wenngleich angestrebt ist, dass das Bändchen exakt in dem vorgegebenen Querschnitt verbleibt, so wird es dennoch hinzunehmen sein, dass das Bändchen aus technischen Gründen beim Fixieren seine Form leicht verändert.

Weiterhin ergibt sich der Vorteil, dass die Ausrichtung und Verteilung der Verstärkungsstapelfasern im Faserband nicht durch Verdrehen oder Umwinden des Faserbandes bei der Herstellung des Bändchens verändert wird. Hierdurch kann das nach dem erfindungsgemäßen Verfahren hergestellte Bändchen eine homogenere Ausrichtung und Verteilung der Verstärkungsstapelfasern aufweisen, als dies bei früheren Verfahren möglich war. Insbesondere können Massenanhäufungen im Bändchen vermieden und gleichmäßige mechanische Eigenschaften des Bändchens in Quer- und in Längsrichtung sichergestellt werden.

Zudem werden die Verstärkungsstapelfasern bei der Herstellung des Bändchens auf Grund der fehlenden Verdrehung und/oder der fehlenden Umwindung weniger strapaziert, so dass die mechanischen Eigenschaften des Bändchens weiter verbessert werden.

Die Fixiereinrichtung kann stromabwärts der Formeinrichtung angeordnet sein oder in die Formeinrichtung integriert sein.

Gemäß einer vorteilhaften Weiterbildung der Erfindung wird das die Verstärkungsstapelfasern enthaltende Faserband stromaufwärts der Formeinrichtung in einem Streckwerk verzogen, so dass die Verstärkungsstapelfasern unidirektional ausgerichtet werden. Auf diese Weise ist es möglich, ein Bändchen zu erzeugen, bei dem die Verstärkungsstapelfasern im Wesentlichen unidirektional und insbesondere parallel zur Längsrichtung ausgerichtet sind. Hierdurch kann die Zugfestigkeit des Bändchens in Längsrichtung optimiert werden. Bei dem Streckwerk kann es sich insbesondere um ein Walzenstreckwerk handeln, welches wenigstens zwei Walzenpaare aufweist, zwischen denen das Faserband jeweils geklemmt wird. Dabei können die Walzenpaare so angetrieben sein, dass deren Umfangsgeschwindigkeit in Laufrichtung des Faserbandes zunimmt, so dass das Faserband verstreckt wird und dabei die darin enthaltenen Verstärkungsstapelfasern in Längsrichtung ausgerichtet werden.

Nach einer vorteilhaften Weiterbildung der Erfindung wird das Faserband in einen unrunden vorbestimmten Querschnitt, bevorzugt in einen dreieckigen oder viereckigen vorbestimmten Querschnitt, besonders bevorzugt in einen rechteckigen oder trapezförmigen vorbestimmten Querschnitt, gebracht. Bändchen mit einem unrunden Querschnitt können bei der Herstellung eines Formteils mit geringeren Lücken als Bändchen mit rundem Querschnitt abgelegt werden. Eckige Bändchen, insbesondere drei- oder viereckige Bändchen können sogar nahezu ohne Lücken abgelegt werden. Dabei können viereckige Bändchen, insbesondere rechteckige und trapezförmige Bändchen, nach deren Herstellung besonders einfach und platzsparend aufgespult werden. Sofern das Bändchen trapezförmig ausgebildet wird, können Schwachstellen längs zweier benachbarter Bändchen im fertigen Formteil vermieden werden da so eine gleichmäßige Verteilung der Verstärkungsfasern im fertigen Formteil möglich wird.

Nach einer zweckmäßigen Weiterbildung der Erfindung weist der vorbestimmte Querschnitt eine Breite von wenigstens 0,5 cm, bevorzugt von wenigstens 2 cm, besonders bevorzugt von wenigstens 5 cm und/oder eine Breite von höchstens 20 cm, bevorzugt von höchstens 15 cm, besonders bevorzugt von höchstens 10 cm, auf. Unter der Breite des Querschnitts wird dabei die größte Erstreckung des Bändchens in einer Richtung verstanden. Bei den angegebenen Mindestbreiten wird erreicht, dass mit wenig nebeneinander liegenden Bändchen ein textiles Flächengebilde erzeugt werden kann, welches eine verhältnismäßig große Fläche aufweist. Durch die Einhaltung der angegebenen Höchstbreiten wird erreicht, dass das Bändchen gut drapierbar ist.

Gemäß einer zweckmäßigen Weiterbildung der Erfindung weist der vorbestimmte Querschnitt eine Höhe von wenigstens 0,01 cm, bevorzugt von wenigstens 0,02 cm, besonders bevorzugt von wenigstens 0,05 cm und/oder eine Höhe von höchstens 1,5 cm, bevorzugt von höchstens 1,0 cm, besonders bevorzugt von höchstens 0,5 cm, auf. Unter der Höhe des Querschnitts wird dabei die Erstreckung des Bändchens in einer Richtung senkrecht zur Breite verstanden. Bei den angegebenen Mindesthöhen wird erreicht, dass das Bändchen eine hinreichende Festigkeit für den Transport und die Weiterverarbeitung aufweist. Durch die Einhaltung der angegebenen Höchsthöhen wird erreicht, dass das Bändchen gut drapierbar bleibt.

Gemäß einer vorteilhaften Weiterbildung der Erfindung weisen die Verstärkungsstapelfasern eine feinheitsbezogene Höchstzugkraft von wenigstens 20 cN/tex, bevorzugt von wenigstens 70 cN/tex, besonders bevorzugt von wenigstens 100 cN/tex, auf. Die Höchstzugkraft ist dabei diejenige Zugkraft, bei der eine Faser gerade noch nicht reißt. Auf diese Weise kann das daraus gefertigte Formteil insbesondere in Faserrichtung eine hohe Zugfestigkeit aufweisen.

Nach einer zweckmäßigen Weiterbildung der Erfindung umfassen die Verstärkungsstapelfasern Glasfasern, Kohlenstofffasern und/oder Aramidfasern. Derartige Materialien erfüllen die Anforderungen an Verstärkungsstapelfasern insbesondere hinsichtlich ihrer Festigkeit, sind weiterhin preiswert und gut verarbeitbar. Es sind aber auch andere Hochmodulfasern möglich. Dabei sind Mischungen unterschiedlicher Fasern möglich, um deren Eigenschaften zu kombinieren.

Nach einer vorteilhaften Weiterbildung der Erfindung bestehen die Verstärkungsstapelfasern aus einem einzigen Material. Auf diese Weise können die Eigenschaften eines für Verstärkungsstapelfasern geeigneten Materials bestmöglichst ausgenutzt werden.

Nach einer zweckmäßigen Weiterbildung der Erfindung weisen die Verstärkungsstapelfasern eine Länge von wenigstens 1 cm, bevorzugt von wenigstens 5 cm, besonders bevorzugt von wenigstens 10 cm und/oder eine Länge von höchstens 30 cm, bevorzugt von höchstens 20 cm, besonders bevorzugt von höchstens 15 cm, auf. Derartige Stapellängen führen zu besonders festen Formteilen. Zudem können derartige Verstärkungsstapelfasern mit gängigen Maschinen hergestellt und weiterverarbeitet werden.

Nach einer vorteilhaften Weiterbildung der Erfindung wird das in den vorbestimmten Querschnitt gebrachte Faserband fixiert, indem es zumindest abschnittsweise mittels einer als Tränkeinrichtung ausgebildeten Fixiereinrichtung mit einem Harz, bevorzugt mit einem Kunstharz, besonders bevorzugt mit einem Epoxydharz oder einem Polyesterharz, getränkt wird, welches zumindest teilweise ausgehärtet wird. Unter einem Harz wird dabei ein Grundstoff für einen Kunststoff verstanden. Durch die Tränkung des Faserbandes und die zumindest teilweise Aushärtung des Harzes kann auf eine besonders einfache Weise eine Fixierung des in den vorbestimmten Querschnitt gebrachten Faserbandes erfolgen. Sofern die Aushärtung des Harzes nur teilweise bewirkt wird, bleibt das Bändchen besonders gut drapierbar. Das Harz kann dabei zumindest einen Teil der späteren Polymermatrix des fertigen Formteils bilden. Insbesondere kann so ein Formteil mit einer duroplastischen Polymermatrix einfach hergestellt werden.

Gemäß einer zweckmäßigen Weiterbildung der Erfindung beträgt die Summe des volumenbezogenen Anteils des Harzes und des volumenbezogenen Anteils der Verstärkungsstapelfasern an dem Bändchen wenigstens 90%, bevorzugt wenigstens 95%, besonders bevorzugt wenigstens 98%. Auf diese Weise können Formteile mit einer besonders guten Festigkeit bei geringem Gewicht hergestellt werden. Die verbleibenden Volumenanteile können beispielsweise auf eine Schlichte oder auf Haftungsvermittler entfallen. Dabei wir unter einer Schlichte eine typischerweise zähflüssige Beschichtung verstanden, welche das Bändchen insbesondere bei der Weiterverarbeitung zu einem textilen Flächengebilde gegen mechanische Einwirkungen schützt. Weiterhin wird unter einem Haftungsvermittler eine Beschichtung verstanden, welche die stoffschlüssige Verbindung zwischen der Polymermatrix und den Verstärkungsstapelfasern verbessert.

Nach einer vorteilhaften Weiterbildung der Erfindung ist vorgesehen, dass das Faserband eine innige Mischung aus den Verstärkungsstapelfasern und aus Thermoplaststapelfasern umfasst, und dass das in den vorbestimmten Querschnitt gebrachte Faserband fixiert wird, indem die Thermoplaststapelfasern erhitzt werden, so dass die Thermoplaststapelfasern zumindest auf Schweißabschnitten verschweißt werden. Durch die Verwendung einer innigen Mischung aus Verstärkungsstapelfasern und aus Thermoplaststapelfasern und die Verschweißung der Thermoplaststapelfasern kann auf eine besonders einfache Weise eine Fixierung des in den vorbestimmten Querschnitt gebachten Faserbandes erfolgen. Sofern die Verschweißung nur auf Schweißabschnitten bewirkt wird, bleibt das Bändchen besonders gut drapierbar. Die Thermoplaststapelfasern können dabei zumindest einen Teil der späteren Polymermatrix des fertigen Formteils bilden. Insbesondere kann so ein Formteil mit einer thermoplastischen Polymermatrix einfach hergestellt werden. Die Verschweißung der Thermoplaststapelfasern kann zum Beispiel mittels Laser und/oder mittels beheizter Klemmwalzen erfolgen.

Nach einer vorteilhaften Weiterbildung der Erfindung beträgt der volumenbezogene Anteil der Verstärkungsstapelfasern an der innigen Mischung wenigstens 30%, bevorzugt wenigstens 40%, besonders bevorzugt wenigstens 50%. Hierdurch wird es möglich, aus dem so hergestellten Bändchen ein Formteil mit besonders hoher Festigkeit herzustellen.

Gemäß einer vorteilhaften Weiterbildung der Erfindung beträgt der volumenbezogene Anteil der Thermoplaststapelfasern an der innigen Mischung wenigstens 20%, bevorzugt wenigstens 30%, besonders bevorzugt wenigstens 35%. Auf diese Weise kann sichergestellt werden, dass die Verstärkungsstapelfasern im fertigen Formteil jeweils vollständig von der aus den Thermoplaststapelfasern gebildeten Polymermatrix umgeben sind, was die stoffschlüssige Verbindung von Polymermatrix und Verstärkungsstapelfasern verbessert und damit den mechanischen Eigenschaften des Formteils zugutekommt.

Gemäß einer zweckmäßigen Weiterbildung der Erfindung umfassen die Thermoplaststapelfasern Polyurethanfasern (insbesondere Fasern aus PU), Polyamidfasern (insbesondere Fasern aus PA), Polyetherketonfasern (insbesondere Fasern aus PAEK sowie aus seinen Abkömmlingen, insbesondere PEEK, PEK, PEEEK, PEEKEK, PEKK), Polypropylenfasern (insbesondere Fasern aus PP), Acrynitril-Butadien-Styrol-Fasern (insbesondere Fasern aus ABS) und/oder Polyesterfasern (insbesondere Fasern aus PES sowie aus seinen Abkömmlingen, insbesondere PBT, PC, PET, PEN). Derartige Materialien erfüllen insbesondere die Anforderungen hinsichtlich ihrer Festigkeit, sind preiswert und gut verarbeitbar.

Gemäß einer vorteilhaften Weiterbildung der Erfindung bestehen die Thermoplaststapelfasern aus einem einzigen Material. Auf diese Weise entsteht im fertigen Formteil in einfacher Weise eine homogene thermoplastische Polymermatrix, was dessen mechanische Eigenschaften verbessert.

Gemäß einer zweckmäßigen Weiterbildung der Erfindung weisen die Thermoplaststapelfasern eine Länge von wenigstens 1 cm, bevorzugt von wenigstens 5 cm, besonders bevorzugt von wenigstens 10 cm und/oder eine Länge von höchstens 30 cm, bevorzugt von höchstens 20 cm, besonders bevorzugt von höchstens 15 cm, auf. Derartige Stapellängen führen zu besonders gut drapierbaren Bändchen, insbesondere, wenn die Thermoplaststapelfasern nur auf Schweißabschnitten verschweißt sind. Zudem können derartige Thermoplaststapelfasern mit gängigen Maschinen hergestellt und weiterverarbeitet werden.

Gemäß einer zweckmäßigen Weiterbildung der Erfindung beträgt die Summe des volumen bezogenen Anteils der Thermoplaststapelfasern und des volumenbezogenen Anteils der Verstärkungsstapelfasern an dem Bändchen wenigstens 90%, bevorzugt wenigstens 95%, besonders bevorzugt wenigstens 98%. Auf diese Weise können Formteile mit einer besonders guten Festigkeit bei geringem Gewicht hergestellt werden. Die verbleibenden Volumenanteile können beispielsweise auf eine Schlichte oder auf Haftungsvermittler entfallen. Dabei wir unter einer Schlichte eine typischerweise zähflüssige Beschichtung verstanden, welche das Bändchen insbesondere bei der Weiterverarbeitung zu einem textilen Flächengebilde gegen mechanische Einwirkungen schützt. Weiterhin wird unter einem Haftungsvermittler eine Beschichtung verstanden, welche die beim Verschweißen der Thermoplaststapelfasern entstehende stoffschlüssige Verbindung zwischen Thermoplaststapelfasern und Verstärkungsfasern verbessert.

In einem weiteren Aspekt betrifft die Erfindung ein Bändchen zur Herstellung von Formteilen, welche eine Polymermatrix und darin eingebettete Verstärkungsstapelfasern aufweisen. Erfindungsgemäß ist es nach einem der vorbeschriebenen Verfahren hergestellt. Vorteile und Weiterbildungen des Bändchens sind oben beschrieben.

Darüber hinaus betrifft die Erfindung ein textiles Flächengebilde zur Herstellung von Formteilen, welche eine Polymermatrix und darin eingebettete Verstärkungsstapelfasern aufweisen. Erfindungsgemäß umfasst es mindestens ein Bändchen der vorbeschriebenen Art.

Gemäß einer zweckmäßigen Weiterbildung der Erfindung ist das textile Flächengebilde ein Gewirk, ein Gestrick, ein Gewebe, ein Geflecht oder ein Gelege. Das erfindungsgemäße Bändchen kann mit verfügbaren Textilmaschinen in einfacher Weise mit hoher Wirtschaftlichkeit insbesondere zu Gewirken, Gestricken, Geweben und Geflechten verarbeitet werden. Die Herstellung von Gelegen ist in der Regel aufwändiger, da Gelege üblicherweise durch Hilfsmittel, beispielsweise durch umlaufende Rahmen, stabilisiert werden müssen. Allerdings entstehen durch die Verwendung von Gelegen größere Spielräume bei der Anordnung des Bändchens, welche bei Gewirken, Gestricken, Geweben und Geflechten zumindest teilweise durch die verwendete Technologie vorgegeben ist. Auf diese Weise können Formteile besonders gut an die zu erwartenden mechanischen Belastungen angepasst werden. Soll beispielsweise das Formteil oder ein Bereich des Formteils lediglich in einer Richtung belastet werden, so können dort sämtliche Bändchen so gelegt werden, dass deren Längsrichtung mit der Richtung der Belastung übereinstimmt.

Weiterhin betrifft die Erfindung ein Formteil welches eine Polymermatrix und darin eingebettete Verstärkungsstapelfasern aufweist. Erfindungsgemäß ist vorgesehen, dass es durch Pressen eines textilen Flächengebildes der vorbeschriebenen Art hergestellt ist. Es ergeben sich die bereits erwähnten Vorteile.

Darüber hinaus betrifft die Erfindung eine Vorrichtung zur Herstellung eines Bändchens, insbesondere der vorbeschriebenen Art, zur Herstellung von Formteilen, welche eine Polymermatrix und darin eingebettete Verstärkungsstapelfasern aufweisen, welcher mindestens ein Faserband zuführbar ist, welches die Verstärkungsstapelfasern enthält. Erfindungsgemäß umfasst sie:
eine Formeinrichtung zum Formen des mindestens einen die Verstärkungsstapelfasern enthaltenden Faserbandes, so dass es ausgangsseitig der Formeinrichtung einen vorbestimmten Querschnitt aufweist und
eine stromabwärts der Formeinrichtung angeordnete Fixiereinrichtung zum Fixieren des in den vorbestimmten Querschnitt gebrachten Faserbandes, so dass der vorbestimmte Querschnitt stabilisiert ist.

Die erfindungsgemäße Vorrichtung ermöglicht insbesondere die Durchführung des erfindungsgemäßen Verfahrens. Weitere Vorteile und Weiterbildungen sind oben beschrieben.

Die vorstehenden vorteilhaften Aus- und/oder Weiterbildungen der Erfindung und/oder die in den abhängigen Ansprüchen wiedergegebenen vorteilhaften Aus- und/oder Weiterbildungen der Erfindung können einzeln oder in beliebiger Kombination miteinander vorgesehen sein, sofern sie nicht eindeutig in Widerspruch zueinander stehen.

Die Erfindung und ihre Weiterbildungen sowie deren Vorteile sind nachfolgend anhand von Figuren näher erläutert. Es zeigen:
- **Figur 1**: ein vorteilhaftes Ausführungsbeispiel eines erfindungsgemäßen textilen Flächengebildes in einer schematischen Querschnittdarstellung,
- **Figur 2**: ein vorteilhaftes Ausführungsbeispiel eines erfindungsgemäßen Bändchens des textilen Flächengebildes der Figur 1 in einer schematischen Längsschnittdarstellung,
- **Figur 3**: ein vorteilhaftes Ausführungsbeispiel einer erfindungsgemäßen Vorrichtung zur Herstellung des Bändchens der Figur 2 in einer schematischen Seitenansicht,
- **Figur 4**: die Formeinrichtung der Figur 3 in einer schematischen Vorderansicht,
- **Figur 5**: ein weiteres vorteilhaftes Ausführungsbeispiel eines erfindungsgemäßen textilen Flächengebildes in einer schematischen Querschnittdarstellung,
- **Figur 6**: ein vorteilhaftes Ausführungsbeispiel eines erfindungsgemäßen Bändchens des textilen Flächengebildes der Figur 5 in einer schematischen Längsschnittdarstellung,
- **Figur 7**: ein vorteilhaftes Ausführungsbeispiel einer erfindungsgemäßen Vorrichtung zur Herstellung des Bändchens der Figur 6 in einer schematischen Seitenansicht und
- **Figur 8**: die Formeinrichtung der Figur 7 in einer schematischen Vorderansicht.

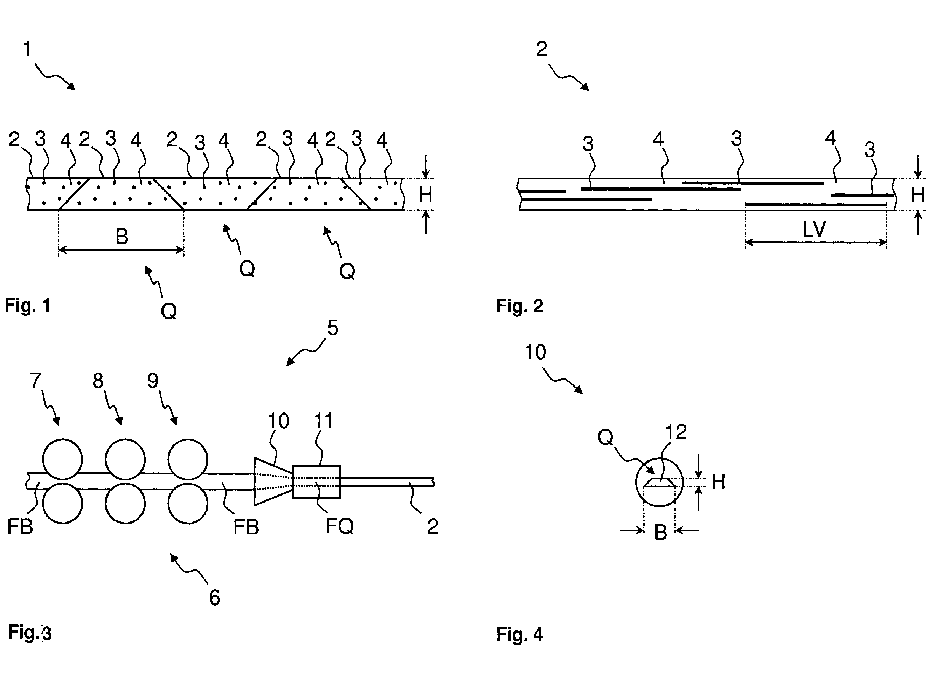

Figur 1 zeigt ein vorteilhaftes Ausführungsbeispiel eines erfindungsgemäßen textilen Flächengebildes 1 in einer schematischen Querschnittdarstellung.

Bei dem textilen Flächengebilde 1 handelt es sich um ein Gelege 1, welches aus einer Lage aus nebeneinander lückenlos verlegten Bändchen 2 besteht. Es wären aber auch Gelege 1 mit mehreren Lagen denkbar. In beiden Fällen können die einzelnen Bändchen aneinandergeheftet sein.

Darüber hinaus kann das textile Flächengebilde 1 auch als ein Gewirk, ein Gestrick, ein Gewebe oder als ein Geflecht ausgebildet sein. Die Herstellung von Gelegen 1 ist in der Regel aufwändiger, da Gelege 1 üblicherweise durch Hilfsmittel, beispielsweise durch umlaufende Rahmen, stabilisiert werden müssen. Allerdings entstehen durch die Verwendung von Gelegen 1 größere Spielräume bei der Anordnung des Bändchens 2, welche bei Gewirken, Gestricken, Geweben und Geflechten zumindest teilweise durch die verwendete Technologie vorgegeben sind. Auf dies Weise können Formteile besonders gut an die zu erwartenden mechanischen Belastungen angepasst werden. Soll beispielsweise das Formteil oder ein Bereich des Formteils lediglich in einer Richtung belastet werden, so können dort sämtliche Bändchen 2 so gelegt werden, dass deren Längsrichtung mit der Richtung der Belastung übereinstimmt.

Jedes der Bändchen 2 umfasst Verstärkungsstapelfaser 3, welche mit einem zumindest teilweise ausgehärteten Harz 4 getränkt sind. Es versteht sich von selbst, dass aus zeichnerischen Gründen lediglich einige beispielhafte Verstärkungsstapelfasern 3 dargestellt und diese auch nur teilweise mit Bezugszeichen versehen sind.

Bevorzugt beträgt die Summe des volumenbezogenen Anteils des Harzes 4 und des volumenbezogenen Anteils der Verstärkungsstapelfasern 3 an dem Bändchen 2 wenigstens 90%, bevorzugt wenigstens 95%, besonders bevorzugt wenigstens 98%. Auf diese Weise können Formteile mit einer besonders guten Festigkeit bei geringem Gewicht hergestellt werden. Die verbleibenden Volumenanteile können beispielsweise auf eine Schlichte oder auf Haftungsvermittler entfallen. Dabei wir unter einer Schlichte eine typischerweise zähflüssige Beschichtung verstanden, welche das Bändchen 2 insbesondere bei der Weiterverarbeitung zu dem textilen Flächengebilde 1 gegen mechanische Einwirkungen schützt. Weiterhin wird unter einem Haftungsvermittler eine Beschichtung verstanden, welche die stoffschlüssige Verbindung zwischen der Polymermatrix und den Verstärkungsstapelfasern 3 verbessert.

Das Gelege 1 kann unmittelbar in einer Presse durch Verlegen der Bändchen 2 gebildet sein, wobei die Presse zum Formen eines Formteils und ggf. zum weiteren Aushärten des aus dem Gelege 1 geformten Formteils ausgebildet sein kann.

Jedes der Bändchen 2 weist einen vorbestimmten Querschnitt Q mit einer Höhe H und einer Breite B auf. Sämtliche Bändchen des Geleges 1 weisen dabei den selben Querschnitt Q auf. Es wäre aber auch möglich, ein Gelege 1 mit Bändchen 2 mit unterschiedlichen Querschnitten Q zu bilden.

Bevorzugt weist der vorbestimmte Querschnitt Q eine Breite B von wenigstens 0,5 cm, bevorzugt von wenigstens 2 cm, besonders bevorzugt von wenigstens 5 cm und/oder eine Breite von höchstens 20 cm, bevorzugt von höchstens 15 cm, besonders bevorzugt von höchstens 10 cm, auf. Unter der Breite B des Querschnitts Q wird dabei die größte Erstreckung des Bändchens 2 in einer Richtung verstanden. Bei den angegebenen Mindestbreiten wird erreicht, dass mit wenig nebeneinander liegenden Bändchen 2 ein textiles Flächengebilde 1 erzeugt werden kann, welches eine verhältnismäßig große Fläche aufweist. Durch die Einhaltung der angegebenen Höchstbreiten wird erreicht, dass das Bändchen 2 gut drapierbar ist.

Bevorzugt weist der vorbestimmte Querschnitt Q eine Höhe H von wenigstens 0,01 cm, bevorzugt von wenigstens 0,02 cm, besonders bevorzugt von wenigstens 0,05 cm und/oder eine Höhe von höchstens 1,5 cm, bevorzugt von höchstens 1,0 cm, besonders bevorzugt von höchstens 0,5 cm, auf. Unter der Höhe H des Querschnitts Q wird dabei die Erstreckung des Bändchens 2 in einer Richtung senkrecht zur Breite B verstanden. Bei den angegebenen Mindesthöhen wird erreicht, dass das Bändchen 2 eine hinreichende Festigkeit für den Transport und die Weiterverarbeitung aufweist. Durch die Einhaltung der angegebenen Höchsthöhen wird erreicht, dass das Bändchen 2 gut drapierbar bleibt.

Bevorzugt weisen die Verstärkungsstapelfasern 3 eine feinheitsbezogene Höchstzugkraft von wenigstens 20 cN/tex, bevorzugt von wenigstens 70 cN/tex, besonders bevorzugt von wenigstens 100 cN/tex, auf. Die Höchstzugkraft ist dabei diejenige Zugkraft, bei der eine Faser gerade noch nicht reißt. Auf diese Weise kann das daraus gefertigte Formteil insbesondere in Faserrichtung besonders hohe mechanische Belastungen aufnehmen.

Vorteilhafterweise umfassen die Verstärkungsstapelfasern 3 Glasfasern, Kohlenstofffasern und/oder Aramidfasern. Derartige Materialien erfüllen die Anforderungen an Verstärkungsstapelfasern 3 insbesondere hinsichtlich ihrer Festigkeit, sind weiterhin preiswert und gut verarbeitbar. Es sind aber auch andere Hochmodulfasern möglich. Bevorzugt bestehen die Verstärkungsstapelfasern 3 aus einem einzigen Material. Auf diese Weise können die Eigenschaften eines für Verstärkungsstapelfasern 3 geeigneten Materials bestmöglichst ausgenutzt werden.

Im Ausführungsbeispiel der Figur 1 sind die Bändchen 2 jeweils mit trapezförmigem Querschnitt Q ausgebildet, so dass Lücken und durch die Überlappung in Querrichtung Schwachstellen längs zweier benachbarter Bändchen 2 im fertigen Formteil vermieden werden können. Grundsätzlich können die Bändchen 2 beliebige Querschnitte Q aufweisen. Es ist jedoch anzumerken, dass Bändchen 2 mit einem unrunden Querschnitt bei der Herstellung eines Formteils mit geringeren Lücken als Bändchen 2 mit rundem Querschnitt abgelegt werden können. Eckige Bändchen 2, insbesondere drei- oder viereckige Bändchen 2 können sogar nahezu ohne Lücken abgelegt werden.

Dabei können viereckige Bändchen 2, insbesondere rechteckige und trapezförmige Bändchen 2, nach deren Herstellung besonders einfach und platzsparend aufgespult und dann transportiert werden, bevor sie zu einem textilen Flächengebilde verarbeitet werden.

Figur 2 zeigt ein vorteilhaftes Ausführungsbeispiel eines erfindungsgemäßen Bändchens 2 des textilen Flächengebildes 1 der Figur 1 in einer schematischen Längsschnittdarstellung. Die Verstärkungsstapelfasern 3 sind im Wesentlichen unidirektional und insbesondere parallel zur Längsrichtung des Bändchens 2 ausgerichtet. Hierdurch kann die Zugfestigkeit des Bändchens 2 in Längsrichtung optimiert werden.

Bevorzugt weisen die Verstärkungsstapelfasern 3 eine Länge LV von wenigstens 1 cm, bevorzugt von wenigstens 5 cm, besonders bevorzugt von wenigstens 10 cm und/oder eine Länge von höchstens 30 cm, bevorzugt von höchstens 20 cm, besonders bevorzugt von höchstens 15 cm, auf. Derartige Stapellängen führen zu besonders festen Formteilen. Zudem können derartige Verstärkungsstapelfasern 3 mit gängigen Maschinen hergestellt und weiterverarbeitet werden.

Figur 3 zeigt ein vorteilhaftes Ausführungsbeispiel einer erfindungsgemäßen Vorrichtung 5 zur Herstellung des Bändchens 2 der Figur 2 in einer schematischen Seitenansicht. Die Vorrichtung 5 weist ein Streckwerk 6 auf, der ein oder mehrere Faserbänder FB, welche die Verstärkungsstapelfasern 3 enthalten, zugeführt sind. Das Faserband FB kann beispielsweise mittels einer nicht gezeigten Karde hergestellt sein. Das Streckwerk 6 ist im Ausführungsbeispiel als Walzenstreckwerk 6 ausgebildet und umfasst ein Einlaufwalzenpaar 7, ein Mittelwalzenpaar 8 und ein Auslaufwalzenpaar 9 zwischen denen das Faserband FB jeweils geklemmt wird. Dabei können die Walzenpaare 7, 8, 9 so angetrieben sein, dass deren Umfangsgeschwindigkeit in Laufrichtung des Faserbandes FB zunimmt, so dass das Faserband FB verstreckt wird und dabei die darin enthaltenen Verstärkungsstapelfasern 3 in Längsrichtung ausgerichtet werden. Auf diese Weise ist es möglich, ein Bändchen 2 zu erzeugen, bei dem die Verstärkungsstapelfasern 3 im Wesentlichen unidirektional und insbesondere parallel zur Längsrichtung ausgerichtet sind. Hierdurch kann die Zugfestigkeit des Bändchen2 in Längsrichtung optimiert werden. Als Streckwerk könnte jedoch auch ein Nadelstabstreckwerk oder ein anderes Streckwerk verwendet werden.

Stromabwärts des Streckwerks 6 ist eine Formeinrichtung 10 vorgesehen, durch welche das die Verstärkungsstapelfasern 3 enthaltende Faserband FB geführt wird, so dass es ausgangsseitig der Formeinrichtung 10 in den vorbestimmten Querschnitt Q gebracht wird. Weiterhin ist vorgesehen, dass das in den vorbestimmten Querschnitt Q gebrachte Faserband FQ mittels einer stromabwärts der Formeinrichtung 10 angeordneten Fixiereinrichtung 11 fixiert wird, so dass der vorbestimmte Querschnitt Q stabilisiert wird.

Durch die Fixiereinrichtung 11 kann das Faserband FQ allgemein im vorbestimmten Querschnitt Q so stabilisiert werden, dass das so entstehende Bändchen 2 beim Transportieren und/oder bei der Weiterverarbeitung eben diesen Querschnitt Q beibehält. Auf diese Weise kann das bisherige Herstellverfahren verkürzt werden, da auf Verfahrensschritte zum Verdrehen und/oder Umwinden des Faserbandes FB verzichtet werden kann. Hierbei kann das Bändchen 2 auf seiner ganzen Länge oder abschnittsweise stabilisiert werden, wobei im letzteren Fall das fertige Bändchen 2 eine bessere Drapierfähigkeit aufweist, was insbesondere dann von Vorteil ist, wenn Formteile mit komplexer Form hergestellt werden sollen.

Bekannte Bändchen 2, welche durch Verdrehen und/oder Umwinden des Faserbandes FB hergestellt werden, weisen zwangsweise einen runden Querschnitt auf. Demgegenüber ergibt sich beim erfindungsgemäßen Verfahren der Vorteil, dass das Bändchen 2 mit jedem beliebigen vorbestimmten Querschnitt Q hergestellt werden kann. Beispielsweise kann die Formeinrichtung 10 hierzu trichterartig ausgebildet sein, wobei der ausgangsseitige Querschnitt einer in Figur 4 gezeigten Austrittsöffnung 12 der Formeinrichtung 10 dem vorbestimmten Querschnitt Q des Faserbandes FQ entsprechen kann. Aufgrund der watteartigen Struktur des Faserbandes FB nimmt das Faserband FB dann den durch die Formeinrichtung 10 vorgegebenen Querschnitt Q an, wenn es durch die Formeinrichtung 10 gezogen wird. Die Formeinrichtung 10 und die Fixiereinrichtung 11 können dabei so zusammenwirken, dass das Faserband FQ so geführt wird, dass es den vorbestimmten Querschnitt Q beibehält, bis es hinreichend stabilisiert wird und den vorbestimmten Querschnitt Q von selbst beibehält.

Weiterhin ergibt sich der Vorteil, dass die Ausrichtung und Verteilung der Verstärkungsstapelfasern 3 im Faserband FB nicht durch Verdrehen oder Umwinden des Faserbandes FB bei der Herstellung des Bändchens 2 verändert wird. Hierdurch kann das nach dem erfindungsgemäßen Verfahren hergestellte Bändchen 2 eine homogenere Ausrichtung und Verteilung der Verstärkungsstapelfasern 3 aufweisen, als dies bei früheren Verfahren möglich war. Insbesondere können Massenanhäufungen im Bändchen 2 vermieden und gleichmäßige mechanische Eigenschaften des Bändchens 2 in Quer- und in Längsrichtung sichergestellt werden.

Zudem werden die Verstärkungsstapelfasern 3 bei der Herstellung des Bändchens 2 auf Grund der fehlenden Verdrehung und/oder der fehlenden Umwindung weniger strapaziert, so dass die mechanischen Eigenschaften des Bändchens 2 weiter verbessert werden.

Im Ausführungsbeispiel der Figuren 1 bis 4 wird das in den vorbestimmten Querschnitt Q gebrachte Faserband FQ fixiert, indem es zumindest abschnittsweise mittels einer als Tränkeinrichtung 11 ausgebildeten Fixiereinrichtung 11 mit einem Harz 4, bevorzugt mit einem Kunstharz, besonders bevorzugt mit einem Epoxydharz oder einem Polyesterharz, getränkt wird, welches zumindest teilweise ausgehärtet wird. Durch die Tränkung des Faserbandes FQ und die zumindest teilweise Aushärtung des Harzes 4 kann auf eine besonders einfache Weise eine Fixierung des in den vorbestimmten Querschnitts Q gebachten Faserbandes FQ erfolgen. Sofern die Aushärtung des Harzes 4 nur teilweise bewirkt wird, bleibt das Bändchen 2 besonders gut drapierbar. Das Harz 4 kann dabei zumindest einen Teil der späteren Polymermatrix des fertigen Formteils bilden. Insbesondere kann so ein Formteil mit einer duroplastischen Polymermatrix einfach hergestellt werden.

Die Vorrichtung 5 ermöglicht es allgemein, das Faserband FB in einem kontinuierlichen Prozess ohne zwischenzeitliche Ablage des laufenden Faserbandes FB zu einem Bändchen 2 zu verarbeiten.

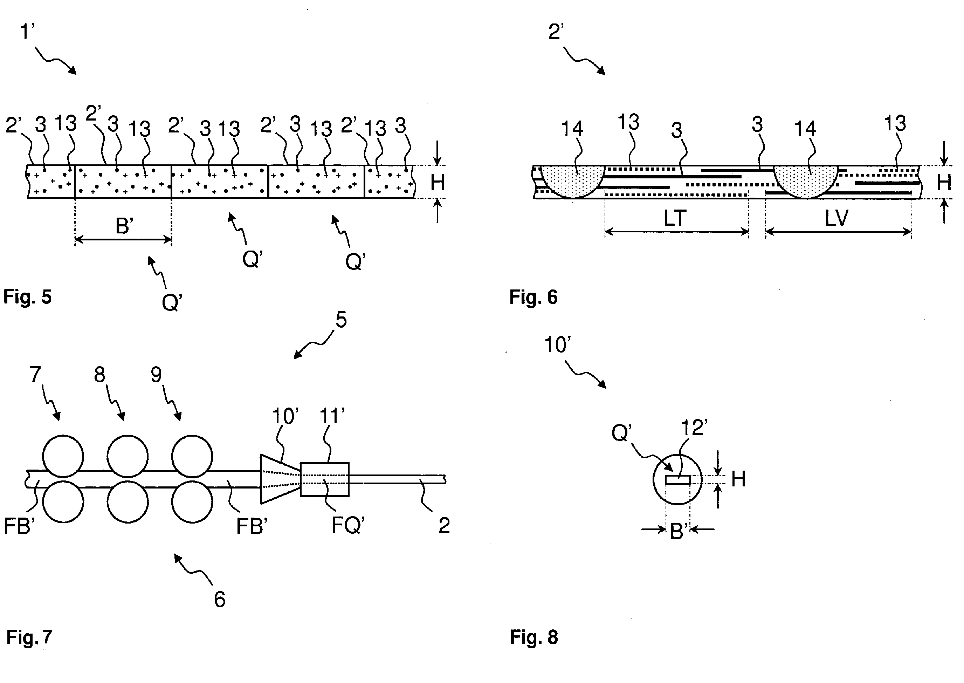

Figur 5 zeigt ein weiteres vorteilhaftes Ausführungsbeispiel eines erfindungsgemäßen textilen Flächengebildes 1' in einer schematischen Querschnittdarstellung. Im Folgenden wird lediglich auf die Abwandlungen zu den Ausführungsbeispielen der Figuren 1 bis 4 eingegangen.

In Figur 5 weisen die Bändchen 2' einen rechteckigen Querschnitt Q' auf. Darüber hinaus ist vorgesehen, dass die Bändchen 2' aus Verstärkungsstapelfasern 3 und aus Thermoplaststapelfasern 13 bestehen.

Figur 6 zeigt ein vorteilhaftes Ausführungsbeispiel eines erfindungsgemäßen Bändchens 2 des textilen Flächengebildes 1 der Figur 1 in einer schematischen Längsschnittdarstellung. Vorteilhaft weisen die Thermoplaststapelfasern 13 eine Länge LT von wenigstens 1 cm, bevorzugt von wenigstens 5 cm, besonders bevorzugt von wenigstens 10 cm und/oder eine Länge LT von höchstens 30 cm, bevorzugt von höchstens 20 cm, besonders bevorzugt von höchstens 15 cm, auf. Derartige Stapellängen führen zu besonders gut drapierbaren Bändchen, insbesondere, wenn die Thermoplaststapelfasern 13 nur auf Schweißabschnitten14 verschweißt sind. Zudem können derartige Thermoplaststapelfasern 13 mit gängigen Maschinen hergestellt und weiterverarbeitet werden.

Figur 7 zeigt ein vorteilhaftes Ausführungsbeispiel einer erfindungsgemäßen Vorrichtung 5 zur Herstellung des Bändchens 2 der Figur 6 in einer schematischen Seitenansicht. Die Vorrichtung 5 weist eine abgewandelte Formeinrichtung 10' auf, welche wie in Figur 8 gezeigt, eine rechteckige Austrittsöffnung 12' umfasst.

Weiterhin wird der Vorrichtung 5' ein Faserband FB' zugeführt, welches eine innige Mischung aus den Verstärkungsstapelfasern 3 und aus den Thermoplaststapelfasern 13 umfasst. Weiterhin umfasst die Vorrichtung 5' eine abgewandelte Fixiereinrichtung 11', welche so ausgebildet ist, dass das in den vorbestimmten Querschnitt Q' gebrachte Faserband FQ' fixiert wird, indem die Thermoplaststapelfasern 13 erhitzt werden, so dass die Thermoplaststapelfasern 13 zumindest auf Schweißabschnitten 14 verschweißt werden. Durch die Verwendung einer innigen Mischung aus Verstärkungsstapelfasern 3 und aus Thermoplaststapelfasern 13 und die Verschweißung der Thermoplaststapelfasern 13 kann auf eine besonders einfache Weise eine Fixierung des in den vorbestimmten Querschnitts Q' gebachten Faserbandes FB' erfolgen. Sofern die Verschweißung nur auf Schweißabschnitten 14 bewirkt wird, bleibt das Bändchen 2' besonders gut drapierbar. Die Thermoplaststapelfasern 13 können dabei zumindest einen Teil der späteren Polymermatrix des fertigen Formteils bilden. Insbesondere kann so ein Formteil mit einer thermoplastischen Polymermatrix einfach hergestellt werden. Die Verschweißung der Thermoplaststapelfasern 13 kann unabhängig vom Ausführungsbeispiel zum Beispiel mittels Laser, mittels beheizter Klemmwalzen und/der mittels eine ähnlichen Einrichtung erfolgen, welche Wärme in das Faserband einbringt, wie z. B. durch Mikrowellen oder durch Induktion.

Bevorzugt beträgt der volumenbezogene Anteil der Verstärkungsstapelfasern 3 an der innigen Mischung wenigstens 30%, bevorzugt wenigstens 40%, besonders bevorzugt wenigstens 50%. Hierdurch wird es möglich, aus dem so hergestellten Bändchen 2' ein Formteil mit besonders hoher Festigkeit herzustellen.

Vorerteilhafterweise beträgt der volumenbezogene Anteil der Thermoplaststapelfasern 13 an der innigen Mischung wenigstens 20%, bevorzugt wenigstens 30%, besonders bevorzugt wenigstens 35%. Auf diese Weise kann sichergestellt werden, dass die Verstärkungsstapelfasern 3 im fertigen Formteil jeweils vollständig von der aus den Thermoplaststapelfasern 13 gebildeten Polymermatrix umgeben sind, was die stoffschlüssige Verbindung von Polymermatrix und Verstärkungsstapelfasern 3 verbessert und damit den mechanischen Eigenschaften des Formteils zugutekommt.

Bevorzugt umfassen die Thermoplaststapelfasern Polyurethanfasern (insbesondere Fasern aus PU), Polyamidfasern (insbesondere Fasern aus PA), Polyetherketonfasern (insbesondere Fasern aus PAEK sowie aus seinen Abkömmlingen, insbesondere PEEK, PEK, PEEEK, PEEKEK, PEKK), Polypropylenfasern (insbesondere Fasern aus PP), Acrynitril-Butadien-Styrol-Fasern (insbesondere Fasern aus ABS) und/oder Polyesterfasern (insbesondere Fasern aus PES sowie aus seinen Abkömmlingen, insbesondere PBT, PC, PET, PEN). Derartige Materialien erfüllen insbesondere die Anforderungen hinsichtlich ihrer Festigkeit, sind preiswert und gut verarbeitbar.

Zweckmäßigerweise bestehen die Thermoplaststapelfasern 13 aus einem einzigen Material. Auf diese Weise entsteht im fertigen Formteil in einfacher Weise eine homogene thermoplastische Polymermatrix, was dessen mechanische Eigenschaften verbessert.

Bevorzugt beträgt die Summe des volumenbezogenen Anteils der Thermoplaststapelfasern 13 und des volumenbezogenen Anteils der Verstärkungsstapelfasern 3 an dem Bändchen 2' wenigstens 90%, bevorzugt wenigstens 95%, besonders bevorzugt wenigstens 98%. Auf diese Weise können Formteile mit einer besonders guten Festigkeit bei geringem Gewicht hergestellt werden. Die verbleibenden Volumenanteile können beispielsweise auf eine Schlichte oder auf Haftungsvermittler entfallen. Dabei wir unter einer Schlichte eine typischerweise zähflüssige Beschichtung verstanden, welche das Bändchen 2' insbesondere bei der Weiterverarbeitung zu einem textilen Flächengebilde 1' gegen mechanische Einwirkungen schützt. Weiterhin wird unter einem Haftungsvermittler eine Beschichtung verstanden, welche die beim Verschweißen der Thermoplaststapelfasern 13 entstehende stoffschlüssige Verbindung zwischen Thermoplaststapelfasern 13 und Verstärkungsstapelfasern 3 verbessert.

### Bezugszeichenliste

- 1: Textiles Flächengebilde
- 2: Bändchen
- 3: Verstärkungsstapelfasern
- 4: Harz
- 5: Vorrichtung zur Herstellung eines Bändchens
- 6: Streckwerk
- 7: Einlaufwalzenpaar
- 8: Mittelwalzenpaar
- 9: Auslaufwalzenpaar
- 10: Formeinrichtung
- 11: Fixiereinrichtung
- 12: Austrittsöffnung
- 13: Thermoplaststapelfasern
- 14: Schweißabschnitt

- Q: Querschnitt
- B: Breite des Bändchens
- H: Höhe des Bändchens
- LV: Länge der Verstärkungsstapelfasern
- FB: Faserband
- FQ: in den vorbestimmten Querschnitt gebrachtes Faserband
- LT: Länge der Thermoplaststapelfasern

## Patentansprüche

1. Verfahren zur Herstellung eines Bändchens (2) zur Herstellung von Formteilen, welche eine Polymermatrix und darin eingebettete Verstärkungsstapelfasern (3) aufweisen, wobei mindestens ein Faserband (FB) verwendet wird, welches die Verstärkungsstapelfasern (3) enthält, **dadurch gekennzeichnet, dass** das die Verstärkungsstapelfasern (3) enthaltende Faserband (FB) durch eine Formeinrichtung (10) geführt wird, so dass es ausgangsseitig der Formeinrichtung (10) in einen vorbestimmten Querschnitt (Q, Q') gebracht wird, und dass das in den vorbestimmten Querschnitt (Q, Q') gebrachte Faserband (FQ, FQ') mittels einer Fixiereinrichtung (11) fixiert wird, so dass der vorbestimmte Querschnitt (Q, Q') stabilisiert wird.

2. Verfahren nach vorstehendem Anspruch, **dadurch gekennzeichnet, dass** das die Verstärkungsstapelfasern (3) enthaltende Faserband (FB) stromaufwärts der Formeinrichtung (10) in einem Streckwerk (6) verzogen wird, so dass die Verstärkungsstapelfasern (3) unidirektional ausgerichtet werden.

3. Verfahren nach einem der vorstehenden Ansprüche, **dadurch gekennzeichnet, dass** das Faserband (FB) in einen unrunden vorbestimmten Querschnitt (Q, Q'), bevorzugt in einen dreieckigen oder viereckigen vorbestimmten Querschnitt (Q, Q'), besonders bevorzugt in einen rechteckigen vorbestimmten Querschnitt (Q') oder trapezförmigen vorbestimmten Querschnitt (Q), gebracht wird.

4. Verfahren nach einem der vorstehenden Ansprüche, **dadurch gekennzeichnet, dass** der vorbestimmte Querschnitt (Q, Q') eine Breite (B, B') von wenigstens 0,5 cm, bevorzugt von wenigstens 2 cm, besonders bevorzugt von wenigstens 5 cm und/oder eine Breite (B, B') von höchstens 20 cm, bevorzugt von höchstens 15 cm, besonders bevorzugt von höchstens 10 cm, aufweist und/oder dass der vorbestimmte Querschnitt (Q, Q') eine Höhe (H) von wenigstens 0,01 cm, bevorzugt von wenigstens 0,02 cm, besonders bevorzugt von wenigstens 0,05 cm und/oder eine Höhe (H) von höchstens 1,5 cm, bevorzugt von höchstens 1,0 cm, besonders bevorzugt von höchstens 0,5 cm, aufweist.

5. Verfahren nach einem der vorstehenden Ansprüche, **dadurch gekennzeichnet, dass** die Verstärkungsstapelfasern (3) eine feinheitsbezogene Höchstzugkraft von wenigstens 20 cN/tex, bevorzugt von wenigstens 70 cN/tex, besonders bevorzugt von wenigstens 100 cN/tex, aufweisen und/oder dass die Verstärkungsstapelfasern (3) Glasfasern, Kohlenstofffasern und/oder Aramidfasern umfassen und/oder dass die Verstärkungsstapelfasern (3) aus einem einzigen Material bestehen.

6. Verfahren nach einem der vorstehenden Ansprüche, **dadurch gekennzeichnet, dass** die Verstärkungsstapelfasern (3) eine Länge (LV) von wenigstens 1 cm, bevorzugt von wenigstens 5 cm, besonders bevorzugt von wenigstens 10 cm und/oder eine Länge (LV) von höchstens 30 cm, bevorzugt von höchstens 20 cm, besonders bevorzugt von höchstens 15 cm, aufweisen.

7. Verfahren nach einem der vorstehenden Ansprüche, **dadurch gekennzeichnet, dass** das in den vorbestimmten Querschnitt (Q) gebrachte Faserband (FQ) fixiert wird, indem es zumindest abschnittsweise mittels einer als Tränkeinrichtung ausgebildeten Fixiereinrichtung (11) mit einem Harz (4), bevorzugt mit einem Kunstharz (4), besonders bevorzugt mit einem Epoxydharz (4) oder einem Polyesterharz (4), getränkt wird, welches zumindest teilweise ausgehärtet wird, wobei die Summe des volumenbezogenen Anteils des Harzes (4) und des volumenbezogenen Anteils der Verstärkungsstapelfasern (3) an dem Bändchen (2) vorzugsweise wenigstens 90%, bevorzugt wenigstens 95%, besonders bevorzugt wenigstens 98%, beträgt.

8. Verfahren nach einem der Ansprüche 1 bis 6, **dadurch gekennzeichnet, dass** das Faserband (FB) eine innige Mischung aus den Verstärkungsstapelfasern (3) und aus Thermoplaststapelfasern (13) umfasst, und dass das in den vorbestimmten Querschnitt (Q') gebrachte Faserband (FQ') fixiert wird, indem die Thermoplaststapelfasern (13) erhitzt werden, so dass die Thermoplaststapelfasern (13) zumindest auf Schweißabschnitten (14) verschweißt werden, wobei der volumenbezogene Anteil der Verstärkungsstapelfasern (3) an der innigen Mischung vorzugsweise wenigstens 30%, bevorzugt wenigstens 40%, besonders bevorzugt wenigstens 50%, beträgt und/oder wobei der volumenbezogene Anteil der Thermoplaststapelfasern (13) an der innigen Mischung wenigstens 20%, bevorzugt wenigstens 30%, besonders bevorzugt wenigstens 35%, beträgt und/oder wobei die Thermoplaststapelfasern (13) Polyurethanfasern, Polyamidfasern, Polyetherketonfasern, Polypropylenfasern, Acrynitril-Butadien-Styrol-Fasern und/oder Polyesterfasern umfassen.

9. Verfahren nach Anspruch 8, **dadurch gekennzeichnet, dass** die Thermoplaststapelfasern (13) aus einem einzigen Material bestehen und/oder dass die Thermoplaststapelfasern (13) vorzgusweise eine Länge (LT) von wenigstens 1 cm, bevorzugt von wenigstens 5 cm, besonders bevorzugt von wenigstens 10 cm und/oder eine Länge (LT) von höchstens 30 cm, bevorzugt von höchstens 20 cm, besonders bevorzugt von höchstens 15 cm, aufweisen.

10. Verfahren nach Anspruch 8 oder 9, **dadurch gekennzeichnet, dass** die Summe des volumenbezogenen Anteils der Thermoplaststapelfasern (13) und des volumenbezogenen Anteils der Verstärkungsstapelfasern (3) an dem Bändchen (2) wenigstens 90%, bevorzugt wenigstens 95%, besonders bevorzugt wenigstens 98%, beträgt.

11. Bändchen zur Herstellung von Formteilen, welche eine Polymermatrix und darin eingebettete Verstärkungsstapelfasern (3) aufweisen, **dadurch gekennzeichnet, dass** es nach einem Verfahren nach einem der Ansprüche 1 bis 10 hergestellt ist.

12. Textiles Flächengebilde zur Herstellung von Formteilen, welche eine Polymermatrix und darin eingebettete Verstärkungsstapelfasern (3) aufweisen, **dadurch gekennzeichnet, dass** es mindestens ein Bändchen (2) nach vorstehendem Anspruch umfasst.

13. Textiles Flächengebilde nach Anspruch 12, **dadurch gekennzeichnet, dass** es ein Gewirk, ein Gestrick, ein Gewebe, ein Geflecht oder ein Gelege (1) ist.

14. Formteil, welches eine Polymermatrix und darin eingebettete Verstärkungsstapelfasern (3) aufweist, **dadurch gekennzeichnet, dass** es durch Pressen eines textilen Flächengebildes (1) nach Anspruch 12 oder 13 hergestellt ist.

15. Vorrichtung zur Herstellung eines Bändchens (2), insbesondere nach Anspruch 11, zur Herstellung von Formteilen, welche eine Polymermatrix und darin eingebettete Verstärkungsstapelfasern (3) aufweisen, welcher mindestens ein Faserband (FB) zuführbar ist, welches die Verstärkungsstapelfasern (3) enthält, **dadurch gekennzeichnet, dass** sie aufweist:
eine Formeinrichtung (10, 10') zum Formen des mindestens einen die Verstärkungsstapelfasern (3) enthaltenden Faserbandes (FB), so dass es ausgangsseitig der Formeinrichtung (10, 10') einen vorbestimmten Querschnitt (Q, Q') aufweist und
eine stromabwärts der Formeinrichtung (10, 10') angeordnete Fixiereinrichtung (11, 11') zum Fixieren des in den vorbestimmten Querschnitt gebrachten Faserbandes (FQ, FQ'), so dass der vorbestimmte Querschnitt (Q, Q') stabilisiert ist.

## Claims

1. A method for producing a ribbon (2) for producing molded parts comprising a polymer matrix and reinforcing staple fibers (3) embedded therein, using at least one fiber band (FB) comprising the reinforcing staple fibers (3), **characterized in that** the fiber band (FB) comprising the reinforcing staple fibers (3) is guided through a forming device (10) so that said band is brought into a predetermined cross section (Q, Q') at the outlet of the forming device (10), and that the fiber band (FQ, FQ') brought into the predetermined cross section (Q, Q') is fixed by means of a fixing device (11) so that the predetermined cross section (Q, Q') is stabilized.

2. The method according to the preceding claim, **characterized in that** the fiber band (FB) comprising the reinforcing staple fibers (3) is drafted in a drafting system (6) upstream of the forming device (10) so that the reinforcing staple fibers (3) are aligned unidirectionally.

3. The method according to any one of the preceding claims, **characterized in that** the fiber band (FB) is brought into a non-round predetermined cross section (Q, Q'), preferably into a triangular or quadrangular predetermined cross section (Q, Q'), particularly preferably into a rectangular predetermined cross section (Q') or trapezoidal predetermined cross section (Q).

4. The method according to any one of the preceding claims, **characterized in that** the predetermined cross section (Q, Q') has a width (B, B') of at least 0.5 cm, preferably of at least 2 cm, particularly preferably of at least 5 cm, and/or a width (B, B') of no greater than 20 cm, preferably of no greater than 15 cm, particularly preferably of no greater than 10 cm and/or that the predetermined cross section (Q, Q') has a height (H) of at least 0.01 cm, preferably of at least 0.02 cm, particularly preferably of at least 0.05 cm, and/or a height (H) of no greater than 1.5 cm, preferably of no greater than 1.0 cm, particularly preferably of no greater than 0.5 cm.

5. The method according to any one of the preceding claims, **characterized in that** the reinforcing staple fibers (3) have a fineness-related maximum tensile strength of at least 20 cN/tex, preferably of at least 70 cN/tex, particularly preferably of at least 100 cN/tex, and/or that the reinforcing staple fibers (3) comprise glass fibers, carbon fibers, and/or aramid fibers and/or that the reinforcing staple fibers (3) are made of a single material.

6. The method according to any one of the preceding claims, **characterized in that** the reinforcing staple fibers (3) have a length (LV) of at least 1 cm, preferably of at least 5 cm, particularly preferably of at least 10 cm, and/or a length (LV) of no greater than 30 cm, preferably of no greater than 20 cm, particularly preferably of no greater than 15 cm.

7. The method according to any one of the preceding claims, **characterized in that** the fiber band (FQ) brought into the predetermined cross section (Q) is fixed **in that** said band is saturated at least in segments by means of a fixing device (11) implemented as a saturation device with a resin (4), preferably with a synthetic resin (4), particularly preferably with an epoxy resin (4) or a polyester resin (4), said resin being at least partially cured, wherein the sum of the volumetric proportion of the resin (4) and the volumetric proportion of the reinforcing staple fibers (3) in the ribbon (2) is advantageously at least 90%, preferably at least 95%, particularly preferably 98%.

8. The method according to any one of the claims 1 through 6, **characterized in that** the fiber band (FB) comprises an intimate mixture of the reinforcing staple fibers (3) and thermoplastic staple fibers (13), and that the fiber band (FQ') brought into the predetermined cross section (Q') is fixed **in that** the thermoplastic staple fibers (13) are heated so that the thermoplastic staple fibers (13) are fused at least into fused segments (14), wherein the volumetric proportion of reinforcing staple fibers (3) in the intimate mixture is advantageously at least 30%, preferably at least 40%, particularly preferably at least 50%, and/or wherein the volumetric proportion of the thermoplastic staple fibers (13) in the intimate mixture is at least 20%, preferably at least 30%, particularly preferably at least 35%, and/or wherein the thermoplastic staple fibers (13) comprise polyurethane fibers, polyamide fibers, polyether-ketone fibers, polypropylene fibers, acrylonitrile butadiene styrene fibers and/or polyester fibers.

9. The method according to claim 8, **characterized in that** the thermoplastic staple fibers (13) are made of a single material and/or that the thermoplastic staple fibers (13) advantageously have a length (LT) of at least 1 cm, preferably of at least 5 cm, particularly preferably of at least 10 cm, and/or a length (LT) of no greater than 30 cm, preferably of no greater than 20 cm, particularly preferably of no greater than 15 cm.

10. The method according to claim 8 or 9, **characterized in that** the sum of the volumetric proportion of the thermoplastic staple fibers (13) and the volumetric proportion of the reinforcing staple fibers (3) in the ribbon (2) is at least 90%, preferably at least 95%, particularly preferably at least 98%.

11. A ribbon for producing molded parts comprising a polymer matrix and reinforcing staple fibers (3) embedded therein, **characterized in that** said ribbon is produced according to a method according to any one of the claims 1 through 10.

12. A textile web material for producing molded parts comprising a polymer matrix and reinforcing staple fibers (3) embedded therein, **characterized in that** the same comprises at least one ribbon (2) according to the preceding claim.

13. The textile web material according to claim 12, **characterized in that** the same is a fabric, a knit, a texture, a mesh, or a mat (1).

14. A molded part comprising a polymer matrix and reinforcing staple fibers (3) embedded therein, **characterized in that** the same is produced by pressing a textile web material (1) according to claim 12 or 13.

15. A device for producing a ribbon (2), particularly according to claim 11, for producing molded parts comprising a polymer matrix and reinforcing staple fibers (3) embedded therein, to which at least one fiber band (FB) comprising the reinforcing staple fibers (3) can be fed, **characterized in that** the same comprises:
a forming device (10, 10') for forming the at least one fiber band (FB) comprising the reinforcing staple fibers (3) so that the same comprises a predetermined cross section (Q, Q') at the outlet of the forming device (10, 10') and
a fixing device (11, 11') disposed downstream of the forming device (10, 10') for fixing the fiber band (FQ, FQ') brought into the predetermined cross section so that the predetermined cross section (Q, Q') is stabilized.

## Revendications

1. Procédé pour fabriquer une lanière (2) pour la fabrication de pièces moulées, qui comportent une matrice polymère et des fibres discontinues de renforcement (3) qui y sont incorporées, dans lequel est utilisé au moins un ruban de fibres (FB), qui contient les fibres discontinues de renforcement (3), **caractérisé en ce que** le ruban de fibres (FB) contenant les fibres discontinues de renforcement (3) est guidé à travers un dispositif de formage (10) de manière à être amené à une section transversale prédéterminée (Q, Q') sur le côté de sortie du dispositif de formage (10), et que le ruban de fibres (FQ, FQ') amené à une section transversale prédéterminée (Q, Q') est fixé au moyen d'un dispositif de fixation (11) de manière à ce que la section transversale prédéterminée (Q, Q') soit stabilisée.

2. Procédé selon la revendication précédente, **caractérisé en ce que** le ruban de fibres (FB) contenant les fibres discontinues de renforcement (3) est étiré dans un banc d'étirage (6) en amont du dispositif de formage (10) de manière à ce que les fibres discontinues de renforcement (3) soient orientées de manière unidirectionnelle.

3. Procédé selon l'une des revendications précédentes, **caractérisé en ce que** le ruban de fibres (FB) est amené dans une section transversale prédéterminée non circulaire (Q, Q'), de préférence dans une section transversale prédéterminée triangulaire ou quadrangulaire (Q, Q'), de manière particulièrement préférée dans une section transversale prédéterminée rectangulaire (Q') ou dans une section transversale prédéterminée trapézoïdale (Q).

4. Procédé selon l'une des revendications précédentes, **caractérisé en ce que** la section transversale prédéterminée (Q, Q') présente une largeur (B, B') d'au moins 0,5 cm, de préférence d'au moins 2 cm, de manière particulièrement préférée d'au moins 5 cm et/ou une largeur (B, B') d'au plus 20 cm, de préférence d'au plus 15 cm, de manière particulièrement préférée d'au plus 10 cm, et/ou que la section transversale prédéterminée (Q, Q') présente une hauteur (H) d'au moins 0,01 cm, de préférence d'au moins 0,02 cm, de manière particulièrement préférée d'au moins 0,05 cm et/ou une hauteur (H) d'au plus 1,5 cm, de préférence d'au plus 1,0 cm, de manière particulièrement préférée d'au plus 0,5 cm.

5. Procédé selon l'une des revendications précédentes, **caractérisé en ce que** les fibres discontinues de renforcement (3) présentent une force à la rupture par rapport à la finesse d'au moins 20 cN/tex, de préférence d'au moins 70 cN/tex, de manière particulièrement préférée d'au moins 100 cN/tex, et/ ou que les fibres discontinues de renforcement (3) contiennent des fibres de verre, des fibres de carbone et/ou des fibres aramides et/ou que les fibres discontinues de renforcement (3) se composent d'une seule matière.

6. Procédé selon l'une des revendications précédentes, **caractérisé en ce que** les fibres discontinues de renforcement (3) présentent une longueur (LV) d'au moins 1 cm, de préférence d'au moins 5 cm, de manière particulièrement préférée d'au moins 10 cm, et/ou une longueur (LV) d'au plus 30 cm, de préférence d'au plus 20 cm, de manière particulièrement préférée d'au plus 15 cm.

7. Procédé selon l'une des revendications précédentes, **caractérisé en ce que** le ruban de fibres (FQ) amené à la section transversale prédéterminée (Q) est fixé en ce sens qu'il est imprégné au moins en certaines parties, à l'aide d'un dispositif de fixation (11) se présentant sous la forme d'un dispositif d'imprégnation, d'une résine (4), de préférence d'une résine synthétique (4), de manière particulièrement préférée d'une résine époxyde (4) ou d'une résine polyester (4), qui est durcie au moins partiellement, sachant que la somme de la part volumique de la résine (4) et de la part volumique des fibres discontinues de renforcement (3) à la lanière (2) s'élève de préférence à au moins 90 %, de manière préférée à au moins 95 %, de manière particulièrement préférée à moins 98 %.

8. Procédé selon l'une des revendications 1 à 6, **caractérisé en ce que** le ruban de fibres (FB) contient un mélange intime de fibres discontinues de renforcement (3) et de fibres discontinues thermoplastiques (13), et que le ruban de fibres (FQ') amené à la section transversale prédéterminée (Q') est fixé en ce sens que les fibres discontinues thermoplastiques (13) sont chauffées, de sorte que les fibres discontinues thermoplastiques (13) soient soudées au moins en des segments de soudure (14), sachant que la part volumique des fibres discontinues de renforcement (3) au mélange intime s'élève de préférence à au moins 30 %, de préférence à au moins 40 %, de manière particulièrement préférée à au moins 50 % et/ou sachant que la part volumique des fibres discontinues thermoplastiques (13) au mélange intime s'élève à au moins 20 %, de préférence à au moins 30 %, de manière particulièrement préférée à au moins 35 %, et/ou sachant que les fibres discontinues thermoplastiques (13) contiennent des fibres polyuréthanes, des fibres polyamides, des fibres de polyéther cétone, des fibres de polypropylène, des fibres d'acrylonitrile-butadiène-styrène et/ou des fibres de polyester.

9. Procédé selon la revendication 8, **caractérisé en ce que** les fibres discontinues thermoplastiques (13) se composent d'une seule matière et/ou que les fibres discontinues thermoplastiques (13) présentent une longueur (LT) d'au moins 1 cm, de préférence d'au moins 5 cm, de manière particulièrement préférée d'au moins 10 cm et/ou une longueur (LT) d'au plus 30 cm, de préférence d'au plus 20 cm, de manière particulièrement préférée d'au plus 15 cm.

10. Procédé selon la revendication 8 ou 9, **caractérisé en ce que** la somme de la part volumique des fibres discontinues thermoplastiques (13) et de la part volumique des fibres discontinues de renforcement (3) à la lanière (2) s'élève à au moins 90 %, de préférence à au moins 95 %, de manière particulièrement préférée à au moins 98 %.

11. Lanière pour la fabrication de pièces moulées, qui comportent une matrice polymère et des fibres discontinues de renforcement (3) qui y sont incorporées, **caractérisée en ce qu'**elle est fabriquée selon un procédé selon l'une des revendications 1 à 10.

12. Structure textile plane pour la fabrication de pièces moulées, qui comportent une matrice polymère et des fibres discontinues de renforcement (3) qui y sont incorporées, **caractérisée en ce qu'**elle comporte au moins une lanière (2) selon la revendication précédente.

13. Structure textile plane selon la revendication 12, caractérisée en ce qu'elle est une étoffe à maille, un tricot, un tissu, une tresse ou un non-tissé (1).

14. Pièce moulée, qui comporte une matrice polymère et des fibres discontinues de renforcement (3) qui y sont incorporées, caractérisée en ce qu'elle est fabriquée par pressage d'une structure textile plane (1) selon la revendication 12 ou 13.

15. Dispositif pour la fabrication d'une lanière (2), en particulier selon la revendication 11, pour la fabrication de pièces moulées, qui comportent une matrice polymère et des fibres discontinues de renforcement (3) qui y sont incorporées, auquel peut être alimenté au moins un ruban de fibres (FB), qui contient les fibres discontinus de renforcement (3), **caractérisé en ce qu'**il présente :
un dispositif de formage (10, 10') pour le formage de l'au moins un ruban de fibres (FB) contenant les fibres discontinues de renforcement (3) de manière à ce qu'il présente une section transversale prédéterminée (Q, Q') sur le côté de sortie du dispositif de formage (10, 10') et
un dispositif de fixation (11, 11') disposé en aval du dispositif de formage (10, 10') pour fixer le ruban de fibres (FQ, FQ') amené à la section transversale prédéterminée de manière à stabiliser la section transversale prédéterminée (Q, Q').
